Europäisches Patentamt

**European Patent Office**

**Office européen des brevets**

(11) Veröffentlichungsnummer : **0 023 682**
**B1**

(12)

# EUROPÄISCHE PATENTSCHRIFT

(45) Veröffentlichungstag der Patentschrift :
**15.12.82**

(51) Int. Cl.³ : **H 04 M 19/08**

(21) Anmeldenummer : **80104396.9**

(22) Anmeldetag : **25.07.80**

(54) **Parallelregelschaltung zum Erzeugen einer konstanten Ausgangsspannung.**

(30) Priorität : **02.08.79 DE 2931456**

(43) Veröffentlichungstag der Anmeldung :
**11.02.81 (Patentblatt 81/06)**

(45) Bekanntmachung des Hinweises auf die Patenterteilung : **15.12.82 Patentblatt 82/50**

(84) Benannte Vertragsstaaten :
**AT BE CH FR GB IT LI LU NL SE**

(56) Entgegenhaltungen :
**AU D 5 497 073**
**FR A 2 151 799**
**FR A 2 158 926**
**FR A 2 266 391**
**FR A 2 281 019**

(73) Patentinhaber : **SIEMENS AKTIENGESELLSCHAFT**
**Berlin und München**
**Postfach 22 02 61**
**D-8000 München 22 (DE)**

(72) Erfinder : **Vogeler, Torsten, Dipl.-Ing.**
**Wiener Strasse 6**
**D-8023 Pullach (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Parallelregelschaltung zum Erzeugen einer konstanten Ausgangsspannung

Die Erfindung bezieht sich auf eine Parallelregelschaltung zum Erzeugen einer konstanten Ausgangsspannung aus einer veränderbaren Eingangsspannung bei der die Eingangsspannung über eine Fernmeldeleitung anliegt, bei der parallel zu einer die Eingangsspannungen erzeugenden Spannungsquelle mit vorgegebenem Innenwiderstand ein Stellglied vorgesehen ist, das einen Teil des Eingangsstroms übernimmt, wenn die Eingangsspannung größer ist als eine Bezugsspannung und das andernfalls gesperrt ist und bei der parallel zum Stellglied ein Energiespeicher angeordnet ist, an dem die Ausgangsspannung abgegeben wird.

Derartige Parallelregelschaltungen sind bereits bekannt. Aus einem Datenblatt TL430 der Firma Texas Instruments ist beispielsweise ein Parallelregler bekannt, bei dem eine Bezugsspannung unter Verwendung eines Spannungsteilers erzeugt wird und einem parallel zu einer Spannungsquelle angeordneten Stellglied zugeführt wird. Dem Stellglied ist ein Energiespeicher in Form eines Kondensators nachgeschaltet, an dem die Ausgangsspannung abgenommen wird.

Wenn die Eingangsspannung größer ist als die Bezugsspannung, übernimmt das Stellglied einen Teil des Eingangsstroms, so daß die Ausgangsspannung konstant bleibt. Wenn die Eingangsspannung kleiner ist als die Bezugsspannung oder kurzzeitig unterbrochen ist, wird das Stellglied gesperrt. Bei der bekannten Parallelregelschaltung kann sich der Energiespeicher jedoch über den Spannungsteller entladen, so daß die Ausgangsspannung in unerwünschter Weise absinkt. Dieser Fall tritt beispielsweise dann ein, wenn die Parallelregelschaltung zum Erzeugen einer konstanten Betriebsspannung in einem Modem verwendet wird, der aus dem Schleifenstrom der Fernsprechleitung gespeist wird und bei dem während der Wahl eines fernen Teilnehmers der Schleifenstrom kurzzeitig unterbrochen wird.

Es wäre denkbar, zwischen dem Stellglied und dem Energiespeicher eine Diode vorzusehen, die das Fließen eines Stromes vom Energiespeicher zum Spannungsteller verhindert. Eine derartige Diode hat jedoch den Nachteil, daß sie einen verhältnismäßig großen Spannungsabfall aufweist, der sich insbesondere bei der Speisung des Modems aus der Fernsprechleitung störend bemerkbar macht.

Der Erfindung liegt daher die Aufgabe zugrunde, eine Parallelregelschaltung anzugeben, bei der ein Entladen des Energiespeichers verhindert wird und bei der dennoch zwischen dem Stellglied und dem Energiespeicher ein geringer Spannungsabfall auftritt.

Erfindungsgemäß wird die Aufgabe bei der Parallelregelschaltung der eingangs genannten Art dadurch gelöst, daß im Verbindungsweg zwischen dem Stellglied und dem Energiespeicher ein gleichzeitig mit dem Stellglied betätigtes Schaltglied vorgesehen ist, das den Strom zwischen dem Energiespeicher und dem Stellglied immer dann unterbricht, wenn das Stellglied gesperrt wird.

Die Parallelregelschaltung hat den Vorteil, daß sie einen verhältnismäßig geringen Aufwand erfordert, da die Ansteuerung des Schaltglieds durch das gleiche Signal erfolgt, das auch das Stellglied sperrt. Wenn die Eingangsspannung größer ist als die Bezugsspannung, ist die Ausgangsspannung wegen der geringen Durchlaßspannung des Schaltglieds nur geringfügig kleiner als die Eingangsspannung. Wenn die Eingangsspannung kleiner ist als die Bezugsspannung oder kurzzeitig unterbrochen ist, wird eine Entladung des Energiespeichers durch die Parallelregelschaltung vermieden.

Ein einfacher Aufbau der Parallelregelschaltung wird insbesondere dann erreicht, wenn als Schalter ein Transistor vorgesehen ist, dessen Kollektor-Emitter-Strecke zwischen dem Stellglied und dem Energiespeicher angeordnet ist und wenn ein weiterer Transistor vorgesehen ist, an dessen Basis die Bezugsspannung anliegt und dessen Kollektor mit der Basis des Transistors verbunden ist.

Die Bezugsspannung wird auf einfache Weise erzeugt, wenn parallel zur Spannungsquelle eine Serienschaltung aus einer Zenerdiode und einem Widerstand angeordnet ist, die an ihrem Mittelabgriff die Bezugsspannung abgibt.

Die gleichzeitige Ansteuerung des Schalters und des Stellglieds wird insbesondere dadurch erreicht, daß als Stellglied ein Transistor vorgesehen ist, dessen Kollektor-Emitter-Strecke parallel zur Spannungsquelle angeordnet ist und an dessen Basis die Bezugsspannung anliegt.

Im folgenden wird ein mit den erfindungsgemäßen Merkmalen ausgestattetes Ausführungsbeispiel der Parallelregelschaltung anhand einer Zeichnung beschrieben.

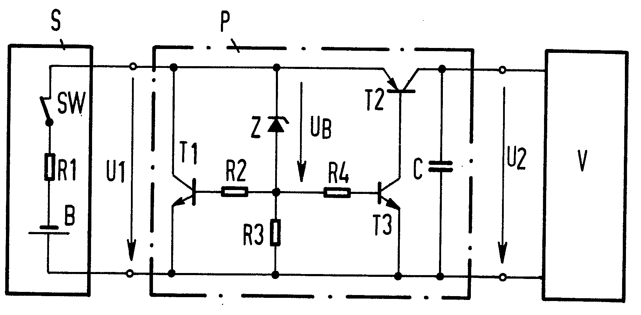

Die Figur zeigt eine zwischen einer Spannungsquelle und einem Verbraucher angeordnete Parallelregelschaltung.

An Eingangsklemmen der in der Figur dargestellten Parallelregelschaltung P liegen Eingangsspannungen $U1$ an, die in einer Spannungsquelle $S$ erzeugt werden. Die Spannungsquelle enthält eine Batterie $B$ und weist einen Innenwiderstand $R1$ auf. Zusätzlich kann die Spannungsquelle einen Schalter $SW$ enthalten, mit der die Eingangsspannung $U1$ kurzzeitig unterbrochen werden kann. An Ausgangsklemmen gibt die Parallelregelschaltung P eine Ausgangsspannung $U2$ ab, die dem Verbraucher $V$ zugeführt wird.

Die Parallelregelschaltung P enthält einen Transistor $T1$, an dessen Kollektor-Emitter-Strecke die Eingangsspannung $U1$ anliegt. Die Basis des Transistors $T1$ ist über einen Widerstand $R2$ mit dem Mittelabgriff einer Serienschaltung aus einer Zenerdiode $Z$ und einem Widerstand $R3$ verbunden. An diesem Mittelabgriff liegt eine Bezugsspannung $UB$ an, die gleich der Zenerspannung der Zenerdiode Z ist. Weiterhin enthält die Parallelregelschaltung P einen Kondensator C, der als Energiespeicher dient. Anstelle des Kondensators C kann auch ein Akkumulator vorgesehen sein. An den Anschlüssen des Kondensators C wird die Ausgangsspannung U2 abgegeben. Zwischen dem als Stellglied dienenden Transistor T1 und dem Kondensator C ist ein Transistor T2 angeordnet, der durch einen Transistor T3 an seiner Basis angesteuert wird. Der Transistor T3 wird seinerseits in ähnlicher Weise wie der Transistor T1 über einen Widerstand R4 angesteuert.

Wenn der Schalter SW in der Spannungsquelle S geschlossen ist, liegt an der Parallelregelschaltung P eine Eingangsspannung U1 an, die größer ist als die an der Zenerdiode Z anstehende Bezugsspannung UB. Der Transistor T1 wird daher leitend gesteuert und zwischen seinem Kollektor und seinem Emitter fließt soviel Strom, daß die Eingangsspannung U1 einen durch die Bezugsspannung UB festgelegten konstanten Wert annimmt. Gleichzeitig mit dem Transistor T1 ist auch der Transistor T3 leitend gesteuert, der seinerseits den Transistor T2 leitend steuert, wodurch der Kondensator C soweit aufgeladen wird, bis die Ausgangsspannung U2 den Wert der Eingangsspannung U1, vermindert um die Durchlaßspannung des Transistors T2 erreicht.

Wenn der Schalter SW in der Spannungsquelle S geöffnet wird und damit die Eingangsspannung U1 kleiner wird als die Bezugsspannung UB, werden die Transistoren T1 und T3 gesperrt. Mit dem Sperren des Transistors T3 wird auch der Transistor T2 gesperrt, der eine Entladung des Kondensators C durch die Parallelregelschaltung P verhindert.

Falls bei geschlossenem Schalter SW die Eingangsspannung U1 absinkt und in die Parallelregelschaltung P nur geringe Eingangsströme fließen, genügt der Spannungsabfall am Widerstand R3 nicht, um die Transistoren T1 und T3 leitend zu steuern. Auch in diesem Fall wird somit der Transistor T2 gesperrt und ein Entladen des Kondensators C verhindert.

**Ansprüche**

1. Parallelregelschaltung zum Erzeugen einer konstanten Ausgangsspannung (U2) aus einer veränderbaren Eingangsspannung (U1) bei der die Eingangsspannung (U1) über eine Fernmeldeleitung anliegt, bei der parallel zu einer die Eingangsspannung erzeugenden Spannungsquelle (5) mit vorgegebenem Innenwiderstand (R1) ein Stellglied (T1) vorgesehen ist, das einen Teil des Eingangsstroms übernimmt, wenn die Eingangsspannung (U1) größer ist als eine Bezugsspannung (UB) und das andernfalls gesperrt ist, und bei der parallel zum Stellglied (T1) ein Energiespeicher (C) angeordnet ist, an dem die Ausgangsspannung (U2) abgegeben wird, dadurch gekennzeichnet, daß im Verbindungsweg zwischen dem Stellglied (T1) und dem Energiespeicher (C) ein gleichzeitig mit dem Stellglied (T1) betätigtes Schaltglied (T2) vorgesehen ist, das den Strom zwischen dem Energiespeicher (C) und dem Stellglied (T1) immer dann unterbricht, wenn das Stellglied (T1) gesperrt wird.

2. Parallelregelschaltung nach Anspruch 1, dadurch gekennzeichnet, daß als Schaltglied ein Transistor (T2) vorgesehen ist, dessen Kollektor-Emitter-Strecke zwischen dem Stellglied (T1) und dem Energiespeicher (C) angeordnet ist und daß ein weiterer Transistor (T3) vorgesehen ist, an dessen Basis die Bezugsspannung (UB) anliegt und dessen Kollektor mit der Basis des Transistors (T2) verbunden ist.

3. Parallelregelschaltung nach Anspruch 1 oder Anspruch 2, dadurch gekennzeichnet, daß parallel zur Spannungsquelle (S) eine Serienschaltung aus einer Zenerdiode (Z) und einem Widerstand (R3) angeordnet ist, die an ihrem Mittelabgriff die Bezugsspannung (UB) abgibt.

4. Parallelregelschaltung nach einem der Ansprüche 1 bis 3, dadurch gekennzeichnet, daß als Stellglied ein Transistor (T1) vorgesehen ist, dessen Kollektor-Emitter-Strecke parallel zur Spannungsquelle (S) angeordnet ist und an dessen Basis die Bezugsspannung (UB) anliegt.

**Claims**

1. A parallel regulating circuit for the production of a constant output voltage (U2) from a variable input voltage (U1), wherein the input voltage (U1) is connected by means of a telecommunications line, and wherein there is arranged, parallel to a voltage source (S) which has a predetermined internal resistance (R1) and produces the input voltage, a setting element (T1) which shunts a component portion of the input current if the input voltage (U1) is higher than a reference voltage (UB) but is otherwise blocked, an wherein there is arranged parallel to the setting element (T1) an energy store (C) from which the output voltage (U2) is emitted, characterised in that there is arranged in the connection path between the setting element (T1) and the energy store (C) a switching element (T2) which is actuated simultaneously with the setting element (T1) and which always interrupts current between the energy store (C) and the setting element (T1) when the setting element (T1) is blocked.

2. A parallel regulating circuit as claimed in Claim 1, characterised in that the switching element is a transistor (T2) whose collector-emitter path is arranged between the setting element (T1) and the energy store (C), and that there is provided a further transistor (T3), to whose base is connected the reference voltage (UB) and whose collector is connected to the base of the transistor (T2).

3. A parallel regulating circuit as claimed in Claim 1 or Claim 2, characterised in that there is arranged parallel to the voltage source (S) a series connection which consists of a Zener diode (Z) and a resistor (R3) to provide the reference voltage (UB) at its centre tap.

4. A parallel regulating circuit as claimed in one of Claims 1 to 3, characterised in that the setting element is a transistor (T1), whose collector-emitter path is arranged parallel to the voltage source (S) and to whose base is connected the reference voltage (UB).

**Revendications**

1. Circuit régulateur parallèle destiné à produire une tension de sortie constante (U2) à partir d'une tension d'entrée (U1) susceptible de varier, du type dans lequel la tension d'entrée (U1) est appliquée par l'intermédiaire d'une ligne télécommunications dans lequel il est prévu, en parallèle sur une source de tension (S) à résistance interne (R1) prédéterminée et produisant la tension d'entrée, un organe de réglage (T1) qui prend en charge une partie du courant d'entrée lorsque la tension d'entrée (U1) est supérieure à une tension de référence (UB) et qui est bloqué, dans le sens contraire, et dans lequel est disposé en parallèle sur l'organe de réglage (T1) un accumulateur d'énergie (C) au niveau duquel est fournie la tension de sortie, caractérisé par le fait que dans la voie de liaison entre l'organe de réglage (T1) et l'accumulateur d'énergie (C) est prévu un organe de commutation (T2) commandé en même temps que l'organe de réglage (T1) et qui interrompt le passage du courant entre l'accumulateur d'énergie (C) et l'organe de réglage toutes les fois que l'organe de réglage (T1) est bloqué.

2. Circuit régulateur parallèle selon la revendication 1, caractérisé par le fait qu'il est prévu, comme organe de commutation, un transistor (T2) dont le circuit collecteur-émetteur est disposé entre l'organe de réglage (T1) et l'accumulateur d'énergie (C) et qu'il est prévu un transistor supplémentaire (T3) à la base duquel est appliquée la tension de référence (UB) et dont le collecteur est relié à la base du transistor (T2).

3. Circuit régulateur parallèle selon la revendication 1 ou la revendication 2, caractérisé par le fait qu'en parallèle sur la source de tension (S) est monté un circuit série constitué par une diode Zener (Z) et par une résistance (R3), qui fournit, au niveau de sa prise médiane, la tension de référence (UB).

4. Circuit régulateur parallèle selon l'une des revendications 1 à 3, caractérisé par le fait qu'il est prévu, comme organe de réglage, un transistor (T1) dont le circuit collecteur-émetteur est monté en parallèle sur la source de tension (S) et à la base duquel est appliquée la tension de référence (UB).